(19) Europäisches Patentamt
European Patent Office
Office européen des brevets

(11) EP 0 777 697 B1

(12) # EUROPEAN PATENT SPECIFICATION

(45) Date of publication and mention of the grant of the patent:
**19.09.2001 Bulletin 2001/38**

(21) Application number: **96918102.3**

(22) Date of filing: **05.06.1996**

(51) Int Cl.[7]: **C08G 77/08**, C08L 83/04, C09D 183/04, C09J 183/04

(86) International application number:
**PCT/US96/08929**

(87) International publication number:
**WO 96/39458 (12.12.1996 Gazette 1996/54)**

(54) **CURABLE SILICONE SEALANT/ADHESIVE COMPOSITIONS**

HÄRTBARE SILIKON KLEBE-/ABDICHTUNGSZUSAMMENSETZUNGEN

COMPOSITIONS ADHESIVES/D'OBTURATION, DURCISSABLES A BASE DE SILICONE

(84) Designated Contracting States:
**AT BE CH DE DK ES FI FR GB GR IE IT LI LU MC NL PT SE**

(30) Priority: **05.06.1995 US 463173**
**07.06.1995 US 481908**

(43) Date of publication of application:
**11.06.1997 Bulletin 1997/24**

(60) Divisional application:
**99203652.5 / 0 987 306**

(73) Proprietor: **LOCTITE CORPORATION**
**Hartford, Connecticut 06106 (US)**

(72) Inventors:
- **CHU, Hsien-Kun**
  **Wethersfield, CT 06109 (US)**
- **RICH, Richard, D.**
  **Avon, CT 06001 (US)**
- **CROSSAN, I., David**
  **Hebron, CT 06248 (US)**
- **CROSS, Robert, P.**
  **Rocky Hill, CT 06067 (US)**
- **NEWBERTH, Frederick, F., II**
  **West Hartford, CT 06107 (US)**
- **SALAMON, Peter, A.**
  **Hebron, CT 06248 (US)**

(74) Representative: **Marchant, James Ian et al**
**Elkington and Fife,**
**Prospect House,**
**8 Pembroke Road**
**Sevenoaks, Kent TN13 1XR (GB)**

(56) References cited:

| | |
|---|---|
| **EP-A- 0 288 869** | **EP-A- 0 467 160** |
| **EP-A- 0 641 830** | **EP-A- 0 651 022** |
| **WO-A-89/06245** | **US-A- 2 793 223** |
| **US-A- 3 697 473** | **US-A- 3 845 161** |
| **US-A- 3 957 717** | **US-A- 4 035 355** |
| **US-A- 4 625 007** | **US-A- 4 632 945** |
| **US-A- 5 002 807** | **US-A- 5 079 312** |

- **PATENT ABSTRACTS OF JAPAN vol. 017, no. 063 (C-1024), 8 February 1993 & JP 04 268315 A (TOSHIBA SILICONE CO LTD), 24 September 1992,**

EP 0 777 697 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to polyorganosiloxane (silicone) sealant/adhesive compositions, including silicone compositions which cure in the absence of oxygen, as well as heat-curable silicone compositions. More specifically, the invention variously relates to low viscosity, reactive silicone sealants useful for sealing porosity in plastics, metals and other porous materials, and having superior physical properties, e.g., fixation and curing times, strength, thermal stability and chemical resistance properties.

Anaerobically curing sealant compositions of various types are old and well-established in the art. The earliest compositions were based on polyalkylene ether polymerizable monomers and organic (meth)acrylate polymerizable monomers. Such compositions typically show poor thermal stability properties.

Due to their excellent thermal stability, silicones have been used for many sealant, adhesive and coating applications. However, because such materials contain large amounts of dissolved oxygen and are highly permeable to oxygen, it was generally believed that silicones would not be anaerobically curable.

Various silicone compositions nonetheless have been disclosed which are said to be anaerobically curable, but these compositions are all characterizable by deficiencies which have limited their commercial utility and acceptance.

U.S. Patent No. 4,035,355 to Baney et al. teaches anaerobically curing sealant compositions including acrylate-containing polyorganosiloxanes and a hydroperoxy polymerization initiator. The Baney compositions are however, disadvantageous due to their relatively long cure time, which is on the order of approximately 24 hours.

U.S. Patent No. 5,391,593 to Inoue et al. is directed to a silicone rubber sealant composition comprising an organopolysiloxane, an organic peroxide and carbon black. This composition is said to cure under anaerobic conditions to yield a silicone rubber having improved physical properties. Such silicones, however, do not fully cure until about 2 to 3 days after removal of oxygen.

Japanese Kokai JP 04268315 to Toshiba Silicone Co, Ltd. is directed to an anaerobically and ultraviolet curable polyorganosiloxane composition for adhesive purposes that is reported as having good heat resistance. This composition is said to show adhesion after 2 hours.

It would be a significant advance in the art to provide an anaerobically curing silicone composition that cures in a short period of time without sacrificing heat stability and strength properties of the cured resin.

Impregnation sealing of microporosity is a commonly used methodology in the art of forming a variety of articles, structural components, and assemblies, as for example castings, die castings, electronic components, powder metal parts, fiber-reinforced resin composites and other materials which exhibit porosity.

Originally, materials, manufacturing techniques, and casting designs were specified to minimize the occurrence of porosity in formed objects, based on the hypothesis that microporosity was structurally and functionally undesirable and its occurrence in formed articles embodied poor manufacturing technique. This approach severely limited design freedom, and resulted in significant rejection of parts exhibiting any substantial porosity characteristics.

This design strategy changed in the 1970s as a result of the energy crisis, which resulted in a major switch to lighter metals for structural applications. During this period many iron parts were changed to cast aluminum components, and many other parts were designed as die castings. This switch to lighter metals resulted in weight savings in many applications where energy consumption and power optimization were important, but created a new and persistent problem of microporosity in the light metal formed parts. The occurrence of microporosity was found to be particularly acute in components formed from metal powder, and to present a significant obstacle to commercial utility, particularly when such porous parts were employed in fluid power systems and other liquid handling applications.

In order to overcome the deficiencies attendant the presence of microporosity in formed articles of the above-described types, impregnation sealing technology was developed, by which the porosity of the porous parts was impregnated with a sealant composition. Upon curing of the impregnated sealant, the resulting sealed part is suitable for use in fluid exposure applications, as well as facilitating plating, coating, and further processing of the formed article.

Among the impregnation sealing compositions which have been developed to date are self-curing anaerobic sealants and thermal curing sealants, as well as sealants which cure by both anaerobic and heat cure mechanisms.

Electronic encapsulating sealant/coating compositions, curable both anaerobically and with exposure to UV light, have also been developed for vacuum impregnation of electrical components such as transformers, wherein the encapsulating sealant is anaerobically cured inside the device and is cured on the outside surface with UV light to encapsulate the device. To effect a thorough outer surface curing of the sealant, such compositions typically contain a UV photoinitiator in concentrations substantially in excess of 5% by weight based on the weight of the curable component thereof.

In addition, sealant/coating compositions have been developed for sealing of laminates, composite materials, and the like, containing macroscopic or gross voids into which the sealant/coating composition after surface application flows by capillary, or wicking action. Generally, sealant/coating compositions employed in such applications are highly viscous in character, having a viscosity substantially greater than 1000 mPas (1000 centipoise), as measured by the

Cannon-Fenske viscosity determination method.

One such conventional formulation, having a Cannon-Fenske viscosity of 4200m Pas (4200 centipoise), contains 3.4 weight percent of a UV photoinitiator, based on the weight of curable component in the sealant/coating composition, to effect surface cure of the composition under UV radiation, in combination with internal anaerobic curing of the composition. The high viscosities of such compositions generally require long processing times for impregnation of microporosity.

Previously developed impregnating compositions for sealing porous parts include the compositions disclosed in the patents identified and discussed below.

U.S. Patent No. 3,672,942 to Neumann discloses an anaerobic impregnant comprising a free-radical polymerizable acrylate ester monomer and free-radical polymerization initiator therefor, e.g., a hydroperoxide. The patent discloses utilizing an accelerator in the impregnant, such as aldehyde-amine condensation products, sulfur-containing free-radical accelerators, or organic compounds containing an oxidizable transition metal. This reference also discloses a vacuum impregnation process in which the porous article is placed in a vacuum vessel, followed by drawing of vacuum therein and covering the article with the disclosed anaerobic sealant so that upon release of vacuum, the sealant is forced into the evacuated porosity of the article. The surface of the impregnated article then is treated with the aforementioned polymerization accelerator to cure the sealant at the outer surface of the porous article.

U.S. Patent No. 3,969,552 describes an impregnation composition comprising an acrylic anaerobic curing resin and a peroxy initiator therefor. The wash solution is an aqueous solution of a surfactant of specified formula. The patent further discloses that the aqueous surfactant solution may contain an accelerator to effect polymerization of the anaerobic sealant in the surface areas of the impregnated part being washed.

U.S. Patent No. Re. 32,240 to DeMarco describes a self-emulsifying anaerobic composition for porosity impregnation applications, comprising an anaerobically curing monomer such as an acrylic ester, a peroxy initiator therefor, e.g., a hydroperoxide or perester, an anionic or nonionic surfactant which is dissolved in the composition and renders it self-emulsifying upon mixing with water, and optionally an accelerator for the anaerobic polymerization, e.g., a sulfimide.

U.S. Patent No. 4,632,945 to Garcia, et al, discloses an anaerobic sealant material comprising a (meth)acrylate monomer, a hydroperoxide or perester initiator, an accelerator having $-SO_2NCO-$ functionality, and a transition metal co-accelerator comprising a source of copper iron and an iron salt or ferrocenyl compound.

The above-described anaerobic sealant compositions are typically impregnated in the porosity of porous metal parts by wet vacuum impregnation, wet vacuum/pressure impregnation, or dry vacuum/pressure impregnation.

All of these and other known reactive sealant compositions are either polyester- or organic (meth)acrylate monomer-based. As a consequence, presently available reactive sealant compositions are severely limited in that they have thermal resistance up to around 350°F. After such temperature is reached the cured resin decomposes and resultingly shrinks away from within the interior of the pores or reduces in weight thereby breaking the seal. Additionally, such prior art sealant compositions if not fully cured within the porosity of parts and components used in electronics, can be somewhat conductive and therefore interfere with electrical properties of the parts.

Hence, it would be a significant advance in the art to provide a sealant composition having improved thermal and chemical resistance and which is non-conductive, even when not fully cured, thereby not interfering with electrical properties of impregnated electronic parts.

## SUMMARY OF THE INVENTION

The invention variously relates to low viscosity, reactive silicone sealant/adhesive compositions, useful, *inter alia,* for sealing porosity in plastics, metals and other porous materials. Such compositions are characterized by superior physical properties, e.g., fixation and curing times, strength, thermal stability and chemical resistance properties.

In a broad aspect, the invention relates to a curable silicone sealant composition, comprising a silicone fluid formed as the reaction product of at least one silane of formula I:

$$R_nSi(X)_{4-n} \quad (I),$$

wherein the R groups are the same or different and selected from the group consisting of hydrogen, $C_1$-$C_{12}$ alkyl, $C_6$-$C_{12}$ aryl, $C_7$-$C_{18}$ arylalkyl, C7-C18 alkylaryl, haloalkyl, haloaryl and monovalent ethylenically unsaturated radicals excluding (meth)acryloxy functional groups,

X is a hydrolyzable functionality, and
n is an integer of from 0 to 3, and at least one second silane of formula II:

$$R^1{}_m R^2{}_p Si(X)_{4-(m+p)} (II),$$

wherein $R^1$ is a (meth)acrylic function group and $R^2$ can be the same or different and is selected from the group consisting of monovalent ethylenically unsaturated radicals, hydrogen, $C_1$-$C_{12}$ alkyl, $C_6$-$C_{12}$ aryl, $C_7$-$C_{18}$ arylalkyl, $C_7$-$C_{18}$ alkylaryl,
X is a hydrolyzable functionality,
m is an integer from 1 to 3, and
m+p is an integer from 1 to 3;

wherein the reaction product is present in said composition together with: (ii) a polymerizable organic (meth)acrylate monomer; and (iii) polymerization initiator.

The silicone compositions of class (II) above preferably are anaerobically cured, but such cure may be enhanced by heating and elevated temperature conditions.

The class (II) silicone compositions of the invention have been shown to have fixture time on pin and collar or nut and bolts comparable to that of polymerizable organic acrylate monomers and much faster than silicone-only compositions. Approximately 15 minutes is needed to fix pin and collar or nut and bolt assemblies with such silicone compositions of the present invention, whereas a minimum of 1-2 hours is generally needed to fix known silicone-only compositions.

The present invention class (II) compositions when anaerobically cured were surprisingly found to have higher strength than the organic monomer compositions or silicone formulations alone. Additionally, such silicone compositions retain significant adhesive strength even after being heat-aged at 250° C for 1 week. Polymerizable organic (meth)acrylate monomer compositions would completely fail under comparable conditions.

For the purposes of this invention the term (meth)acrylate or (meth)acrylic is a general expression to be taken as including methacryloxy or acryloxy radicals of the formula

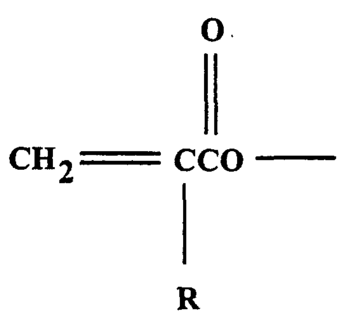

where R is H or $CH_3$.

Silicone sealant compositions of the present invention may be formulated and employed to readily penetrate and fill voids in porous materials. For example, by using a vacuum process, air may be removed from the porosity of porous parts to be impregnated, and replaced with the reactive silicone. The silicone sealant may then be cured by anaerobic and/or heating conditions, depending on the specific composition of the impregnant medium, to yield a cured and sealingly effective composition in the porosity of the impregnated part.

As used herein, low viscosity refers to a viscosity that is low enough to permit the silicone composition to enter into the pores of an article having porosity to be impregnated. Typically, such viscosity is from 1 to 1000 mPas (1 to 1000 centipoise), but viscosities outside of this range may be used when appropriate.

All viscosities reported herein are measured at room temperature (25°C) by a Brookfield Viscometer and all molecular weights referred to herein are measured at room temperature by gel permeation chromatography unless otherwise stated.

Other aspects, features and embodiments of the invention will be more fully apparent from the ensuing disclosure.

## BRIEF DESCRIPTION OF THE DRAWINGS

Figure 1 is a schematic illustration of a process system according to one embodiment of the present invention for impregnating porosity of porous articles.

Figure 2 is a graph of the weight of an impregnation sealant composition according to the present invention as a function of elevated temperature exposure over time.

Figure 3 is a graph of the weight of a known impregnation sealant as a function of elevated temperature exposure over time.

Figure 4 is a three-dimensional graph wherein the weight loss of an impregnation sealant composition according to the present invention is compared to the weight loss of other impregnation sealants as a function of elevated temperature over time.

In a preferred aspect the present invention is directed to an impregnation sealant composition comprising a low viscosity vulcanizable silicone. Such viscosity is typically from 1 to 1000, preferably from 1 to 500, and most preferably from 1 to 100 mPas (centipoise) as measured at room temperature.

The vulcanizable silicone sealant compositions according to the present invention may optionally contain, as needed, polymerization inhibitors and other stabilization additives as well as any other silicone composition additives generally known in the art. Examples of inhibitors useful in the present compositions include, but are not limited to, 2-methyl-3-butyn-ol and 2-methyl-3-hexyn-ol.

In compositions according to the present invention when the low viscosity vulcanizable silicone is a heat-curable silicone composition, at least one of the first and second silicon-containing materials has a molecular weight that is less than 1000.

In such heat-curable silicone compositions according to the present invention, examples of the first silicon containing material include, but are not limited to, linear polyorganosiloxanes, monomeric silanes, polydimethylsiloxane chains having SiH functionality located at either the ends or the middle of the chains, and cyclic siloxanes. Preferably, the first silicon-containing material is selected from the group consisting of SiH terminated polydimethylsiloxane, copolymers of polydimethyl siloxane and polymonomethyl siloxane, tetrakisdimethylsilylsilane, and tetramethyl cylcotetrasiloxane.

Typical examples of the second silicon-containing material include, but are not limited to, polyorganosiloxane containing ethylenically unsaturated functionalities and monomeric silanes containing ethylenically unsaturated functionalities. Preferably, the second silicon containing material is vinyl-terminated polydimethylsiloxane, tetramethyl tetravinyl cylcotetrasilane or tetrakis(vinyl dimethylsilyl)silane.

In another aspect, the present invention is directed to an impregnation process for sealing porosity in porous articles. The process comprises placing the porous article in an impregnation chamber and applying vacuum to the impregnation chamber to evacuate the porosity of the article therein. The porous article then may be contacted at higher-than-vacuum pressure with an impregnation sealant composition comprising the low viscosity vulcanizable silicone. Penetration of the impregnant composition into the porosity of the article thereby takes place. The composition then may be cured within the pores of the article to seal the porosity.

In such porosity impregnation process, the penetration of the composition into the porosity of the article may optionally be assisted by pressurizing the impregnation chamber.

Typical processes employing silicone compositions of the invention are briefly described below with reference to impregnation of porous parts contained in a basket which is introduced into the impregnation chamber, which is the typical method of parts containment if the parts are of suitably small size; in the case of larger parts, the same are typically mounted on or suspended from hoist or other carrier means which is successively translated through the process system including the impregnation chamber.

In the wet vacuum impregnation process, the basket of porous parts is submerged into a vacuum tank of sealant. A short-term, e.g., 10-12 minute, vacuum cycle removes air from the porosity of the parts. The chamber then is returned to ambient pressure, with sealant penetrating into the evacuated porosity. The basket of parts then may be spun briefly in the vacuum tank to allow centrifugal force to eliminate excess sealant waste.

The wet vacuum/pressure impregnation process is similarly conducted, but with the impregnation chamber being pressurized at the end of the vacuum cycle to drive sealant further into small porosity passages.

In the dry vacuum/pressure impregnation method, the basket of porous parts is placed directly in the dry vacuum chamber. Air is evacuated from the porosity in the parts for a selected length of time, e.g., 10 minutes. A

transfer valve then is open, allowing sealant to enter the vacuum chamber from a storage reservoir. The chamber is automatically pressurized to force sealant into the parts. After impregnation, while the sealant is being returned to the reservoir, a centrifuge operation spins the basket to remove excess surface sealant.

Among the foregoing methods, wet vacuum impregnation techniques are generally more widely employed than the dry vacuum/pressure impregnation process, however, either process is suitable for use in the present invention.

Following the initial impregnation step, the impregnated parts are optionally transferred to an agitated water rinse zone, for removal of any remaining surface sealant or sealant trapped in blind holes of the impregnated parts. The agitation of the water rinse zone may be effected by movement of the basket or suspended parts in such zone and/or mechanical means for effecting circulation of water therein. In the case of small porous parts contained in a basket, it frequently is desirable to operate the water rinse zone in a "tumbling basket" mode to enhance the washing operation and prevent parts with surface sealant deposits which are in contact with one another from sticking together, as a result of polymerization of the contiguous surface sealant deposits.

Thereafter, the impregnated parts may be transferred to a final rinse zone. This final rinse solution may be at elevated temperature, e.g., on the order of about 65.5°C (150°F) or higher, to warm the impregnated parts for quick drying, and to accelerate curing of the impregnant within the interior porosity of the article, the rate of such cure increasing with increasing temperature. Alternatively, curing may be done at this juncture by the application of hot air.

The final rinse step may also incorporate in the rinse solution suitable rust inhibitor material, for application of a rust inhibiting film to the impregnated article.

In the case of anaerobically curing impregnant compositions in accordance with the invention, the silicone impregnant composition cures in situ in the pores of the article, but as mentioned, such anaerobic curing may be enhanced by the use of hot rinse or other elevated temperature conditions.

In use, the impregnation compositions of the present invention may be conventionally employed in an impregnation chamber of typical construction, wherein a "wet" or "dry" vacuum is imposed on the porous parts to be impregnated and the evacuated porous parts contact the impregnation composition at higher, e.g. ambient pressure, whereby the impregnant composition passes into the porosity of the porous parts to effect impregnation thereof. It may be suitable in some instances to add catalyst or accelerator species to the impregnation composition.

Referring now to Figure 1, there is shown a schematic depiction of a process system for "dry" vacuum impregnation of porosity of porous articles. While the invention is shown with respect to "dry" vacuum arrangement it will be recognized that this description is for illustrative purpose only and that the impregnation compositions of the invention are equally amenable to use in process systems including "wet" or "dry" vacuum impregnation of porous parts, the choice of "wet" or "dry" vacuum impregnation depending on the composition and porous character of the porous parts, and their intended end use application.

The porous part impregnation system in this illustrative embodiment comprises an impregnation chamber 10 having an interior volume 12 in which is disposed basket 14 containing porous metal parts (not shown).

The impregnation chamber 10 is joined in flow communication via conduit 16 with a vacuum 18, for selectively applying a vacuum to the impregnation chamber so that the air therein is withdrawn to evacuate the porosity of the porous parts in the basket.

Subsequent to evacuation of interior volume 12 of the impregnation chamber 10, impregnation sealing composition according to the present invention, as stored in reservoir 20 and maintained therein at higher pressure than the evacuated chamber, is flowed in line 22 into the interior volume of the impregnation chamber. The vacuum conditions applied by vacuum 18 are discontinued once the impregnation composition fills the impregnation chamber to the desired extent.

As a result, the impregnation sealant composition penetrates into the porosity of the porous parts in basket 14. Such hydrostatic impregnation may be further assisted by reversing the vacuum 18 to pressurize the interior volume 12 of the impregnation chamber 10, to force the impregnation composition further into small porosity passages of the part to be impregnated.

The class II silicone compositions of the invention comprise:

(i) a silicone fluid formed as the reaction product of
at least one first silane of formula I:

$$\mathbf{R_nSi(X)_{4-n}} \qquad \mathbf{(I),}$$

wherein the R groups are the same or different and selected from the group consisting of hydrogen, $C_1$-$C_{12}$ alkyl, $C_6$-$C_{12}$ aryl, $C_7$-$C_{18}$ arylalkyl, $C_7$-$C_{18}$ alkylaryl, haloalkyl, haloaryl, and monovalent ethylenically unsaturated radicals excluding (meth)acryloxy functional groups,

X is a hydrolyzable functionality, and
n is an integer of from 0 to 3, and

at least one second silane of formula II:

$$R^1_m R^2_p Si(X)_{4-(m+p)} \qquad \textbf{(II),}$$

wherein $R^1$ is a (meth)acrylic functional group and $R^2$ can be the same or different and is selected from the group consisting of monovalent ethylenically unsaturated radicals, hydrogen, $C_1$-$C_{12}$ alkyl, $C_6$-$C_{12}$ aryl, $C_7$-$C_{18}$ arylalkyl, $C_7$-$C_{18}$ alkylaryl,

X is a hydrolyzable functionality,
m is an integer from 1 to 3, and
m+p is an integer from 1 to 3;

(ii) a polymerizable organic (meth)acrylate monomer; and

(iii) polymerization initiator.

The silicone fluid is from 40 weight% to 95 weight% of the composition, preferably from 50 weight% to 90 weight% of the composition, and most preferably from 60 weight% to 85 weight% of the composition.

In the reaction forming the silicone fluid according to the present composition said at least one second silane is from 1 to 99 mole%, preferably from 10 to 70 mole%, and most preferably from 20 to 50 mole% of the total of said at least one first and said at least one second silane. It therefore follows that said at least one first silane is from 99 to 1 mole%, preferably from 90 to 30 mole% and most preferably from 80 to 50 mole% of the total of said at least one first and said at least one second silanes.

In the composition according to the present innovation, the hydrolyzable functionality in either or both the first silane or the second silane may be any functionality which when attached to a silicon atom via a Si-O, Si-halo, Si-N or Si-S bond is readily hydrolyzable in the presence of water. Examples of such functionalities include, but are not limited to halogen, (meth)acryloxy, alkoxy, aryloxy, isocyanato, amino, acetoxy, oximinoxy, aminoxy, amidato, and alkenyloxy.

In compositions of the present invention, R may preferably be selected from the group consisting of $C_1$-$C_{12}$ alkyl and $C_6$-$C_{12}$ aryl. In such instances when R is $C_1$-$C_{12}$ alkyl or $C_6$-$C_{12}$ aryl, examples of typical first silanes that may be used in preferred embodiments of the present invention include, but are not limited to, dimethylchlorosilane, phenyltrichlorosilane, tetrachlorosilane, trimethylchlorosilane, trimethylmethoxysilane, dimethyldimethoxysilane and phenyltrimethoxysilane, and tetraethoxysilane.

Polymerizable organic (meth)acrylate monomers suitable for use in the present invention include all such monomers known in the art. Examples of such monomers include, but are not limited to, hydroxyethyl methacrylate, polyethyleneglycol dimethacrylate, isoborneol acrylate, trimethylolpropane ethoxy triacrylate, triethyleneglycol dimethacrylate, ethyleneglycol dimethacrylate, tetraethyleneglycol dimethacrylate, polyethyleneglycol, diacrylate, 1,3-butyleneglycol dimethacrylate, trimethylol propane trimethacrylate, neopentylglycoldimethacrylate, ethoxylated bisphenol A dimethacrylate, propoxylated bisphenol C dimethacrylate and bisphenol A bis(2-hydroxypropyl)dimethacrylate, cylclohexyl methacrylate, 2-ethylhexyl methacrylate, hydroxyethyl methacrylate isooctyl acrylate and n-butyl acrylate. Polyethyleneglycol dimethacrylate, 2-hydroxyethyl methacrylate, and dihydrocyclopentadienyloxyethyl methacrylate are preferred.

The polymerizable organic (meth)acrylate is present in an amount that is from 1 weight% to 60 weight%, preferably from 5 weight% to 50 weight%, and most preferably from 10 weight% to 40 weight%, based on the total composition.

In preferred embodiments of the present composition the (meth)acrylic functional group of said at least one second silane is selected from the group consisting of (meth)acryloxyalkyl, (meth)acryloxyalkenyl, (meth)acryloxyaryl. Preferably, the methacrylic functional group is (meth)acryloxypropyl.

In the present composition, when R2 is selected from the group consisting of $C_1$-$C_{12}$ alkyl, $C_6$-$C_{12}$ aryl, alkenyl, (meth)acryloxy, and vinyl, said at least one second silane is selected from the group consisting of (meth)acryloxypropyl trimethoxysilane, (meth)acryloxypropyl trichlorosilane, (meth)acryloxypropyl dimethylchloro silane, (meth)acryloxymethyl dichlorosilane and (meth)acryloxymethyldimethyl acryloxysilane.

The at least one second silane component can be obtained commercially or prepared by any method known in the art to prepare methacrylate functional silanes. Examples of such methods can be found in U.S. Patent Nos.

2,793,223; 2,898,361; 2,922,806; 2,922,807; 4,348,454, 4,665,147; 5,179,134; 5,182,315; and 5,212,211.

The compositions described hereinabove are given anaerobic characteristics by incorporating therein an appropriate polymerization initiator system. The initiator must be capable of inducing polymerization of the composition in the substantial absence of oxygen, and yet not induce polymerization as long as oxygen is present.

Although all art known initiator systems capable of inducing polymerization in the substantial absence of oxygen are suitable for use in the present invention, since the compositions used in this invention may be cured through free radical mechanism, a typical initiator system for use in the present invention is a redoxy polymerization initiator. Such an initiator system is comprised of an ingredient or combination of ingredients which produce an oxidation reduction reaction, resulting in the production of free radicals.

The most common initiator systems of this type are those involving peroxy materials which under the appropriate conditions decompose to form peroxy free radicals.

A class of peroxy initiators, which has been found readily adaptable to the anaerobic concept and particularly suitable to the present invention is the hydroperoxy initiators. Of these, organic hydroperoxides are preferred. Particularly preferred organic hydroperoxides include, p-menthane hydroperoxide, diisopropyl benzene hydroperoxide, pinene hydroperoxide, methyl ethyl ketone hydroperoxide, t-butyl-2-hydroxyethyl peroxide, t-butyl peroxymaleic acid, cumene hydroperoxide and tertiary-butyl hydroperoxide.

Additionally, inorganic peroxides and compositions such as peroxy esters as for example t-butyl perbenzoate, benzophenone peroxyesters and fluorenone peroxyesters, peroxy carbates and halogen containing compounds having electronic structures which facilitate free radical formation, esters which decompose to form free radicals are also useful. Thus, as used herein, the term "peroxy" is intended to mean peroxides, hydroperoxides and peresters which are suitable for preparing anaerobically curing system.

The polymerization initiators should be used in the compositions of the present invention in merely the amount needed to cure the composition after the composition has been excluded from oxygen. Polymerization initiator may be used in amount which are from 0.01 weight% to 10 weight% based on the total composition.

The compositions of this invention may also comprise stabilizers and accelerators such as primary accelerators and secondary accelerators. Examples of accelerators useful in the present invention, include, but are not limited to, diethyl p-toluidine, saccharin, and acetyl phenyl hydrazine. The purpose of these is to stabilize the composition during storage and provide controllable curing rates when oxygen is excluded from the compositions.

The present compositions optionally comprise fillers, pigments, and additives. Such optional components may include all which are common to the organosilicon art as long as they do not adversely effect the anaerobic curing properties of the compositions.

The present compositions may be prepared by mixing under ambient conditions and in the absence of active metals, the appropriate amount of at least one first silane according to formula I:

$$\mathbf{R_nSi(X)_{4-n}} \qquad \mathbf{(I),}$$

wherein the R groups are the same or different and selected from the group consisting of hydrogen, $C_1$-$C_{12}$ alkyl, $C_6$-$C_{12}$ aryl, $C_7$-$C_{18}$ arylalkyl, $C_7$-$C_{18}$ alkylaryl, haloalkyl, haloaryl and monovalent ethylenically unsaturated radicals excluding (meth)acryloxy functional groups, X is a hydrolyzable functionality, and n is an integer of from 0 to 3; at least one second silane of formula II:

$$\mathbf{R^1{}_mR^2{}_pSi(X)_{4-(m+p)}} \qquad \mathbf{(II),}$$

wherein $R^1$ is a (meth)acrylic functional group and $R^2$ can be the same or different and is selected from the group consisting of monovalent ethylenically unsaturated radicals, hydrogen, $C_1$-$C_{12}$ alkyl, $C_6$-$C_{12}$ aryl, $C_7$-$C_{18}$ arylalkyl, $C_7$-$C_{18}$ alkylaryl, X is a hydrolyzable functionality, m is an integer from 1 to 3, and m+p is an integer from 1 to 3;

a polymerizable organic (meth)acrylate monomer; and

polymerization initiator an any other appropriate components,

using any of the techniques which are common to the polymer art, such as blending and stirring.

By the term ambient conditions it is meant that oxygen is not excluded from the composition and that the temperature of the composition is approximately equal to room temperature.

By the term active metal it is meant those metals that are known to catalyze the anaerobic curing process in

the presence of an appropriate anaerobic curing initiator, as for example a hydroperoxy initiator. Examples of active metals, include, but are not limited to, iron, steel, nickel, copper, bronze, brass, commercial aluminum, cobalt, manganese and beryllium.

The compositions of the present invention can be prepared and used immediately, if desired, or the compositions can be prepared and stored for long periods of time prior to their intended use. It is only necessary to maintain contact between such compositions and oxygen in a well known manner and to avoid the presence of even small amounts of active metals, to prevent the storable compositions from curing.

When the compositions of this invention are brought into contact with an activating surface such as an active metal surface, and oxygen is not allowed to contact the composition, such as when the compositions are applied to threads of a steel bolt and/or nut and the nut is threaded onto the bolt, a relatively rapid curing reaction takes place whereupon the composition is polymerized to an insoluble solid.

When used as an impregnant, the composition of the invention is forced into the porosity of the article to be sealed, typically through the imposition of a pressure differential, which may for example involve evacuation of the porosity followed by contacting of the impregnant composition with the article so that the composition permeates into the porosity, or by any other conventional techniques (e.g., so-called "wet vacuum," "dry vacuum/pressure," and "wet vacuum/pressure" processes, etc.) known in the art for such impregnation.

When utilized as impregnation compositions for impregnation of porosity, the silicone compositions of the invention are desirably formulated to have a viscosity suitable for such application. The viscosity for impregnation applications may be achieved by appropriate choice of compositional components of the impregnation formulation, e.g., low molecular weight species, which may for example include viscosity-adjusting ingredients, as will be apparent to those skilled in the art. For example, the composition may be formulated to provide a viscosity in the range of from 1 to 1000 mPas (centipoise) or other suitable viscosity characteristics, as measured at room temperature by Brookfield viscometer.

The class (II) compositions of the invention can also be cured by heating, in the presence or absence of air.

The compositions of the invention cure to solid materials which are insoluble in common organic solvents and are characterized by improved thermal stability and decreased fixation time, relative to anaerobically curing compositions that are based on only polymerizable organic monomers, and those anaerobically curing compositions based on known anaerobically curing silicone compositions. Simple thermogravimetric analysis and a nitrogen atmosphere can be used to evaluate the thermal stability of the composition. The temperature at which rapid weight loss begins is noted and is designated the upper limit temperature for the composition. The upper limit temperature is an indication of the lowest temperature at which the composition will have no useful life because of thermal degradation of the composition.

The efficacy of the compositions of this invention as anaerobically curing sealant compositions may be readily determined by the prevailing torque test. In this test several drops of the composition to be tested are placed on the threads of a metal bolt and/or nut, the nut is threaded on to the bolt and the resulting assembly of nut, bolt and composition is kept at room temperature for a period of time while the composition between the bolt and nut cures. At the end of a specified length of time the torque required to produce relative motion between the nut and bolt of an assembly is noted at 90°, 180°, 270°, and 360° of rotation. The prevailing torque for the assembly is the average of the four torques measurements so taken.

The compositions of this invention are useful in a method for sealing the small volumes between two or more surfaces, at least one surface of which is an activating surface such as an active metal such as the volume between the two mating portions of surfaces brought into close proximity. Examples of an activating surface include the surface of an inactive material such as glass, cadmium, titanium and zinc, or the surface of an inhibiting surface such as certain anodized surfaces, oxide finishes and chromate finishes having deposited thereon an active metal or any of the activating priming compositions that are well-known in the anaerobic sealing art. Examples of two mating surfaces brought into close proximity in addition to the aforementioned nut and bolt assembly, include a concentric arrangement of parts such as a cylinder placed in a tube having an inside diameter slightly larger than the diameter of the cylinder or a parallel arrangement of parts such as one flat surface pressed onto another flat surface. Other examples will be readily apparent to one skilled in the art.

The composition can be applied to and in contact with the surfaces by any suitable means such as spreading or dipping, with the surfaces to be bonded or sealed then being brought into close proximity with one another. Any solvent which may be present should be allowed to evaporate before the surfaces are brought into close proximity.

Alternatively, when the composition possesses sufficient fluidity, the surfaces to be sealed can be brought into close proximity with one another and the composition subsequently applied, e.g., by capillary action, into the small volume between and in contact with the surface. The composition, if positioned and enclosed by the surface in such manner as to be effectively excluded from oxygen, cures to an insoluble solid form and adheres to the surface to yield an assembly with two or more surfaces held in a fixed relative configuration.

In another embodiment the invention is directed to a method of producing an anaerobically curing composition.

The method comprises allowing at least one first silane of formula I:

$$R_nSi(X)_{4-n} \quad (I)$$

wherein the R groups are the same or different and selected from the group consisting of hydrogen, $C_1$-$C_{12}$ alkyl, $C_6$-$C_{12}$ aryl, $C_7$-$C_{18}$ arylalkyl, $C_7$-$C_{18}$ alkylaryl and monovalent ethylenically unsaturated radicals excluding (meth)acryloxy functional groups, X is a hydrolyzable functionality, and n is an integer of from 0 to 3
to react with at least one second silane of formula II:

$$R^1{}_nR^2{}_mSi(X)_{4-(m+n)} \quad (II),$$

wherein $R^1$ is a (meth)acryloxy functional group and $R^2$ is selected from the group consisting of monovalent ethylenically unsaturated radicals, hydrogen, $C_1$-$C_{12}$ alkyl, $C_6$-$C_{12}$ aryl, $C_7$-$C_{18}$ arylalkyl, $C_7$-$C_{18}$ alkylaryl, X is a hydrolyzable functionality, m is an integer from 1 to 3, and m+p is an integer from 1 to 3, to produce a silicone fluid in the presence an effective amount of water to hydrolyze the hydrolyzable groups on the first and second silanes.

At ambient temperature, in the presence of oxygen, polymerizable (meth)acrylate monomer and a polymerization initiator are added to the silicone fluid, thereby producing the anaerobically curable composition.

The following non-limiting examples more fully illustrate the various aspects and features of the present invention.

**Example 1**

In a 1 liter 3-necked round bottom flask equipped with a mechanical stirrer, thermometer and addition funnel was charged with 49.9g trimethylmethoxysilane, 52.8 g dimethyldimethoxysilane, 106.9 g phenyltrimetroxysilane and 133.9 g methacryloxypropyl trimethoxysilane. A 2% aqueous HCl solution (67.1 g) then was slowly added to the mixture over a half hour period with vigorous stirring. The mixture was heated to 70°C with nitrogen sparge to remove methanol. The mixture was further heated to 90°C for 10 minutes after methanol removal. The mixture was then cooled and diluted with approximately 300 ml toluene. The toluene solution was separated and washed repeatedly with water and aqueous sodium bicarbonate solution. Toluene was then removed under reduced pressure to yield a liquid resin with a viscosity of 23,000 m Pas (cps)

TABLE II

| COMPONENT | %WT |
|---|---|
| Polyethyleneglycol Dimethacrylate MW=400 | 94% |
| Cumene Hydroperoxide | 3% |
| diethyl p-toluidine | 1% |
| Saccharin | 2% |

Ninety-six parts of this resin was mixed with 1 part of saccharin, 2 parts of cumene hydroperoxide, 1 part of diethyl p-toluidine and 100 parts of the composition set forth in Table I above. Several drops of this mixture then were applied to 9.525mm (3/8 inch) nut and bolt assemblies. The mixture cured anaerobically at ambient temperature as well as at 121°C (250°F). The prevailing torque for the assemblies were measured 24 hours after application. The results are compared with results obtained using the composition X in Table I and are shown below:

| 50-50 Resin & Composition X | Composition X Only |
|---|---|
| Prevailing Torque | |
| 22.59Nm (200 inch-lbs.)<br>24 hr.room temperature<br>Prevailing Torque | 28.24Nm (250 inch-lbs.) |
| 20.33Nm (180 inch-lbs.)<br>24 hr-121°C (250°F) (hot break) | 29.38Nm (260 inch-lbs.) |

**Example 2**

Resin from Example 1 was further formulated in the following manner: 50 parts of the resin was mixed with 1 part of saccharin, 1 part of diethyl p-toluidine and 2 parts of cumene hydroperoxide. The formulated resin (i) was further mixed with 2-hydroxyethyl methacrylate (HEMA) in various ratios. Steel pin and collar assemblies were used to test the efficacy of the anaerobic formulations. Several drops of the anaerobic formulations were dropped onto the cylindrical surface of a 50.8mm (2 inch) steel pin with 12.7mm (1/2 inch) diameter. A 11.11mm (7/16 inch) thick steel collar having an inside diameter slightly larger than the pin was placed over the cylinder. Both mating surfaces of the cylinder and collar were wetted by the anaerobic formulation by gently rotating and sliding the pin and collar. After wetting, the assembly was allowed to cure at ambient conditions as well as at 121°C (250°C) for 48 hours. The shear stresses needed to break the pin and collar assemblies are then determined. The fixture times for the assemblies are also determined. Fixture time in this example is defined as the time needed to fix the pin and collar assembly so that when placed vertically on a horizontal plane, enough cure would have taken place to prevent the collar from slipping down the pin due to gravity. The results shown are shown in Table II below ($N/cm^2$ = Newton/square centimeter):

Table II

| Sample | Fixture Time, hr. | Curing Conditions | Shear Stress ($N/cm^2$) |
|---|---|---|---|
| | | | |
| Silicone Formulation (i) | 1-2 | ambient - 48 hours | 222 |
| Composition X | 0.25 | ambient - 48 hours | 120 |
| Silicone (I): HEMA=1:1 | 0.25 | ambient - 48 hours | 312 |
| Silicone (I): HEMA=2:1 | 0.25 | ambient - 48 hours | 191 |
| Composition X | 0.25 | 250°F - 48 hours | 158 |
| Silicone (I): HEMA=2:1 | 0.25 | 250°F - 48 hours | 272 |

**Example 3**

In a 1 liter 3 necked round bottom flask equipped with a mechanical stirrer, thermometer and an addition funnel was charged with 42.4 g dimethyldimethoxysilane, 57.5 g phenyltrimethoxysilane, and 114.1 g methacryloxypropyl trimethoxysilane. With rapid stirring, 57.3 g of a 2% aqueous HCl solution was slowly added to the mixture in a one hour period. The mixture was then heated to 75°C for one hour with removal of methanol. The mixture was further heated to 90°C for approximately 10 minutes. The mixture was then allowed to cool to room temperature. The material was washed with aqueous sodium bicarbonate. The mixture was then diluted with approximately 300 ml of toluene. The toluene solution was then washed repeatedly with water and dried. Toluene was then removed under reduced pressure to yield a clear liquid with a viscosity of 420 Pas (cps).

The resin thus prepared was formulated with 1% saccharin, 1% diethyl p-toluidine and 2% cumene hydroperoxide. A separate 2-hydroxyethyl methacrylate formulation was also prepared by mixing 2-hydroxyethyl methacrylate with same levels of saccharin, diethyl p-toluidine and cumene hydroperoxide. The silicone resin and 2-hydroxyethyl methacrylate formulation was then mixed in various ratios. The fixture time was determined using 9.525mm (3/8 inch) nut and bolt assemblies. The time required for the formulation to cure anaerobically to such an extent that the 9.525mm (3/8 inch) nut and bolt assembly can not be twisted off using hands is determined. The efficacy of the formulations were tested on the steel pin and collar assemblies as described in Example 2. Heat aging tests for the assemblies were performed 72 hours after ambient cure. Shear stress ($N/cm^2$) needed to break the assemblies are recorded. The results are shown in Table III below.

Table III

| | Fixture Time (hr) | 25°C- 1 week | 150°C- 1 week | 250°C- 1 week |
|---|---|---|---|---|
| | | | | |
| Composition X | 0.25 | | | 0 |
| 2-HEMA only (no silicone) | 0.25 | 263 | 356 | 0 |
| HEMA:Silicone=1:1 | 0.25-0.5 | 207 | 319 | 2.3 |

Table III (continued)

| | Fixture Time (hr) | 25°C- 1 week | 150°C- 1 week | 250°C- 1 week |
|---|---|---|---|---|
| HEMA:Silicone=1:2 | 0.25-0.5 | 183 | 239 | 5.4 |
| HEMA:Silicone=1:4 | 0.25-0.5 | 114 | 150 | 7.3 |
| Silicone only | >2.0 | 103 | 137 | 7.4 |

**Example 4**

In a two liter 3 necked round bottom flask equipped with a mechanical stirrer, thermometer and an addition funnel was charged with 466 g of toluene, 152.2 g of trimethylchlorosilane, 237.6 g of phenyltrimethoxysilane, and 347.2 g of methacryloxypropyl trimethoxysilane. With rapid stirring, 404 g of water was slowly added to the solution. An exothermic reaction ensued so that the temperature of the mixture rose to 60°C. After the addition of water, the mixture was further heated to 90°C for 4 hours. When the mixture was still warm (50°C), washing with aqueous sodium bicarbonate solution began. The mixture was repeatedly washed with aqueous sodium bicarbonate solution until neutral. The mixture was then further washed with water. Phase inversion was observed during washing. The mixture was further diluted with 1 liter of hexane and dried over magnesium sulfate overnight. The mixed solvent was then evaporated under reduced pressure. The viscosity of the resin was found to be 2660 Pas (cps).

Ninety-six parts of the resin thus prepared was mixed with 1 part of saccharin, 1 part of diethyl p-toluidine and 2 parts of cumene hydroperoxide. Separately, 96 parts of a polyethyleneglycol dimethacrylate (PEGMA) (approximate molecular weight=370) was also formulated with 1 part of saccharin, 1 part of diethyl p-toluidine and 2 parts of cumene hydroperoxide. The silicone formulation and the polyethyleneglycol dimethacrylate formulation were then mixed in various ratios. The efficacy of various formulations were determined using steel pin and collar assemblies (shear stress, $kg/cm^2$) and the fixture time of various formulations were determined using 9.525mm (3/8 inch) nut and bolt assemblies. The results are shown in Table IV below:

Table IV

| | Fixture Time (hr.) | 25°C 1 week | 150°C 1 week | 175°C 1 week | 200°C I week | 225°C 1 week |
|---|---|---|---|---|---|---|
| 100% PEGMA | <0.25 | 87 | 120 | 40 | 13 | 11 |
| PEGMA: Silicone=1:1 | <0.25 | 155 | 98 | 64 | 10 | 2 |
| PEGMA: Silicone=1:2 | <0.25 | 130 | 130 | 104 | 13 | 3 |
| 100% Silicone | 2-3 | 108 | 107 | 112 | 96 | 57 |

**Example 5**

In a similar fashion to Example 10, phenyl trimethoxysilane (257.8 g) and acryloxymethyldimethyl acryloxysilane (187.3 g) were co-hydrolyzed using 67.1 g of 2% aqueous HCl solution to yield a liquid with a viscosity of 4,200 Pas (cps). Thirty grams of this resin was further formulated with 3.0g of a hydrophobic fumed silica (HDK-2000), 2.75g m-phenylene dimaleimide, 5.50 g dihydrocyclopentadienyloxyethyl methacrylate, 0.18g saccharin, 0.18g diethyl p-toluidine and 0.36g cumene hydroperoxide. The formulated resin was a viscosity of 9,000 Pas (cps). The formulation was applied to 9.525mm (3/8") nut and bolt assemblies. The fixture time was found to be 15 minutes. The assemblies were further heat aged. The break and prevailing torques (inch-lb) are determined and shown below:

| | |
|---|---|
| Room Temperature Cure: | 230/240 |
| 225°C - 24 hours | 150/250 |
| 225°C - 48 hours | 125/280 |

**Example 6**

(A) Formulation A was made in the following manner.

A solution containing trimethylchlorosilane 0.35 moles, methacryloxypropyltrimethoxysilane 0.40 moles, phenyltrimethoxysilane 0.05 moles and tetraethoxysilane 0.20 moles in approximately 70 grams of xylene was mixed and stirred in a 500 ml 3-neck round bottom flask equipped with a mechanical stirrer, reflux condenser and an addition funnel. Approximately 25-30 grams of water was then slowly added to the solution over a 15 minute period. The addition of water caused a light exotherm. The mixture was further stirred for 4 hours. The mixture was allowed to phase separate and the aqueous layer discarded. The organic layer was vacuum stripped at 70° C to remove the xylene solvent.

(B) Formulation B was made in the following manner.

A solution containing trimethylchlorosilane 0.35 moles, methacryloxypropyltrimethoxysilane 0.38 moles and phenyltrimethoxysilane 0.27 moles in approximately 70 grams of xylene were mixed and stirred in a 500 ml 3-neck round bottom flask equipped with a mechanical stirrer, reflux condenser and an addition funnel. Approximately 25-30 grams of water was then slowly added to the solution over a 15 minute period. The addition of water caused a light exotherm. The mixture was further stirred for 4 hours. The mixture was allowed to phase separate and the aqueous layer discarded. The organic layer was vacuum stripped at 70° C to remove the xylene solvent.

(C) Formulation C was made in the following manner.

A solution containing trimethylchlorosilane 0.30 moles, methacryloxypropyltrimethoxysilane 0.30 moles, phenyltrimethoxysilane 0.10 moles and tetraethoxysilane 0.30 moles in approximately 70 grams of xylene were mixed and stirred in a 500 ml 3-neck round bottom flask equipped with a mechanical stirrer, reflux condenser and an addition funnel. Approximately 25-30 grams of water was then slowly added to the solution over a 15 minute period. The addition of water caused a light exotherm. The mixture was further stirred for 4 hours. The mixture was allowed to phase separate and the aqueous layer discarded. The organic layer was vacuum stripped at 70° C to remove the xylene solvent.

(D) Formulation D was made in the following manner.

A solution containing trimethylchlorosilane 0.35 moles, methacryloxypropyltrimethoxysilane 0.20 moles, phenyltrimethoxysilane 0.25 moles and tetraethoxysilane 0.20 moles in approximately 70 grams of xylene were mixed and stirred in a 500 ml 3-neck round bottom flask equipped with a mechanical stirrer, reflux condenser and an addition funnel. Approximately 25-30 grams of water was then slowly added to the solution over a 15 minute period. The addition of water caused a light exotherm. The mixture was further stirred for 4 hours. The mixture was allowed to phase separate and the aqueous layer discarded. The organic layer was vacuum stripped at 70° C to remove the xylene solvent.

(E) Formulation E was made in the following manner.

A solution containing trimethylchlorosilane 0.30 moles, methacryloxypropyltrimethoxysilane 0.40 moles, phenyltrimethoxysilane 0.20 moles and tetraethoxysilane 0.10 moles in approximately 70 grams of xylene were mixed and stirred in a 500 ml 3-neck round bottom flask equipped with a mechanical stirrer, reflux condenser and an addition funnel. Approximately 25-30 grams of water was then slowly added to the solution over a 15 minute period. The addition of water caused a light exotherm. The mixture was further stirred for 4 hours. The mixture was allowed to phase separate and the aqueous layer discarded. The organic layer was vacuum stripped at 70° C to remove the xylene solvent.

Formulations C, D, and E were evaluated similarly to that above to and the results are shown in Table V below:

Table V

| Properties tested on 3/8-16 stl N&B degr.& oiled with 5% oil (in - lbs) | D 20% Ma | C 30% Ma | E 40% Ma |
|---|---|---|---|
| | | | |
| 1 hr @ 25C, degr N & B | 137/172 | 200/114 | 199/292 |
| 1 hr @ 25C, oiled N & B | 66/67 | 154/144 | 151/212 |
| 24 hr @ 25C, degr N & B | 413/234 | 374/212 | 226/301 |
| 24 hr @ 25C, oiled N & B | 236/211 | 309/154 | 190/309 |

Table V (continued)

| Properties tested on 3/8-16 stl N&B degr.& oiled with 5% oil (in - lbs) | D 20% Ma | C 30% Ma | E 40% Ma |
|---|---|---|---|
| Hot strength @ 300F, degr N&B | 190/100 | 228/80 | 168/190 |
| Hot strength @ 300F, oiled | 60/100 | 132/80 | 132/80 |

## INDUSTRIAL APPLICABILITY OF THE INVENTION

The silicone compositions of the present invention have utility as sealants for the sealing/bonding of a wide variety of substrate materials and physical structures.

The composition may for example be used in sealing porosity of porous parts, for threadlocking of mechanical fasteners, for sealing void spaces or interstices between contiguous or otherwise proximate structures, or as an adhesive medium for bonding of various physical objects and materials.

## Claims

**1.** An anaerobically curing composition, comprising:

(i) a silicone fluid formed as the reaction product of at least one silane of formula I:

$$R_nSi(X)_{4-n} \qquad (I)$$

wherein:

the R groups are the same or different and are selected from the group consisting of hydrogen, $C_1$-$C_{12}$ alkyl, $C_6$-$C_{12}$ aryl, $C_7$-$C_{18}$ arylalkyl, $C_7$-$C_{18}$ alkylaryl, haloalkyl, haloaryl and monovalent ethylenically unsaturated radicals,
X is a hydrolyzable functionality selected from the group consisting of halogen, alkoxy, aryloxy, isocyanato, amino, acetoxy, oximinoxy, aminoxy, amidato, and alkenyloxy, and
n is an integer from 0 to 3, and

at least one second silane of formula II:

$$R^1{}_mR^2{}_pSi(X)_{4-(m+p)} \qquad (II)$$

wherein:

$R^1$ is a (meth)acrylic functional group and $R^2$ can be the same or different and is selected from the group consisting of monovalent ethylenically unsaturated radicals, hydrogen, $C_1$-$C_{12}$ alkyl, $C_6$-$C_{12}$ aryl, $C_7$-$C_{18}$ arylalkyl, and $C_7$-$C_{18}$ alkylaryl,
X is a hydrolyzable functionality selected from the group consisting of halogen, alkoxy, aryloxy, isocyanato, amino, acetoxy, oximinoxy, aminoxy, amidato, and alkenyloxy,
m is an integer from 1 to 3, and
m+p is an integer from 1 to 3,

(ii) a polymerizable organic (meth)acrylate monomer; and

(iii) a polymerization initiator.

**2.** The composition of claim 1, wherein the polymerization initiator comprises a hydroperoxy initiator.

**3.** The composition of claim 1, wherein said second silane is from 1 to 99 mole% of the total of said first and second silanes.

**4.** The composition of claim 1, wherein said second silane is from 10 to 70 mole% of the total of said first and second silanes.

**5.** The composition of claim 1, wherein said second silane is from 20 to 50 mole% of the total of said first and second silanes.

**6.** The composition of claim 1, wherein the silicone fluid constitutes from 40 to 95 weight% of the composition.

**7.** The composition of claim 6, wherein the silicone fluid constitutes from 50 to 90 weight% of the composition.

**8.** The composition of claim 1, wherein the silicone fluid constitutes from about 60 to about 85 weight% of the composition.

**9.** The composition of claim 1, wherein the polymerizable organic (meth)acrylate monomer is present at a concentration of from 1 to 60 weight% of the composition.

**10.** The composition of claim 1, wherein the polymerizable organic (meth)acrylate monomer is present at a concentration of from 5 to 50 weight% of the composition.

**11.** The composition of claim 1, wherein the polymerizable organic (meth)acrylate monomer is present at a concentration of from 10 to 40 weight% of the composition.

**12.** The composition of claim 1, wherein the polymerization initiator is present in an amount that is from 0.01 to 10 weight% of the composition.

**13.** The composition of claim 1, wherein the hydrolyzable functionality X is alkoxy.

**14.** The composition of claim 1, wherein the polymerizable organic (meth)acrylate monomer is selected from the group consisting of 2-hydroxyethylmethacrylate and polyethyleneglycol dimethacrylate.

**15.** The composition of claim 1, wherein R is selected from the group consisting of $C_1$-$C_{12}$ alkyl and $C_6$-$C_{12}$ aryl.

**16.** The composition of claim 1, wherein said first silane is selected from the group consisting of dimethyldichlorosilane, phenyltrichlorosilane, tetrachlorosilane, trimethylchlorosilane, trimethylmethoxysilane, dimethyldimethoxysilane, phenyltrimethoxysilane, and tetraethoxysilane.

**17.** The composition of claim 1, wherein the polymerizable organic (meth)acrylate monomer is selected from the group consisting of 2-hydroxyethyl methacrylate, polyethyleneglycol dimethacrylate and dihydrocyclopentadienyloxyethyl methacrylate.

**18.** The composition of claim 1, wherein said (meth)acrylic functional group $R^1$ is selected from the group consisting of (meth)acryloxyalkyl, (meth)acryloxyalkenyl, and (meth)acryloxyaryl.

**19.** The composition of claim 1, wherein said methacrylic functional group $R^1$ is methacryloxypropyl.

**20.** The composition of claim 1, wherein $R^2$ is selected from the group consisting of $C_1$-$C_{12}$ alkyl and $C_6$-$C_{12}$ aryl, alkenyl, (meth)acryloxy, and vinyl.

**21.** The composition of claim 1, wherein said second silane is selected from the group consisting of (meth)acryloxypropyl trichlorosilane, (meth)acryloxypropyl trimethoxysilane, (meth)acryloxypropyl dimethylchlorosilane, (meth) acryloxymethyl dichlorosilane and (meth)acryloxymethyldimethyl acryloxysilane.

**22.** The composition of claim 1, wherein the polymerization initiator is selected from the group consisting of cumene hydroperoxide, p-mentane hydroperoxide, diisopropyl benzene hydroperoxide, pinene hydroperoxide, methyl ethyl ketone hydroperoxide, t-butyl-2-hydroxyethyl peroxide, t-butyl peroxymaleic acid and t-butyl hydroperoxide.

**23.** A method of making a composition according to any of claims 1-22, comprising reacting at least one first silane of formula I in the presence of water with at least one second silane of formula II to produce said silicone fluid; and

at ambient temperature and in the presence of oxygen, adding to said silicone fluid said polymerizable organic (meth)acrylate monomer, and said polymerization initiator.

**24.** A method of impregnating porosity of a porous article, comprising:

(A) contacting the porosity of the porous article with a composition according to any of claims 1-22, under pressure conditions mediating ingress of the composition into the porosity; and
(B) curing said ingressed composition in said porosity, to yield an impregnated article comprising sealed porosity.

**25.** A method of forming a cured silicone material, comprising curing a silicone composition according to any of claims 1-22 under anaerobic conditions.

**26.** Use of the composition of any of claims 1-22, for impregnating porosity of a porous article to impregnatingly seal said porosity.

**27.** A porous article having porosity thereof sealed with a cured silicone impregnation sealant composition produced by impregnating in said porosity a composition according to any of claims 1-22 and anaerobically curing same.

**Patentansprüche**

**1.** Eine anaerob härtende Zusammensetzung, enthaltend:

(i) ein Siliconfluid, gebildet als das Reaktionsprodukt von wenigstens einem Silan der Formel I:

$$R_nSi(X)_{4-n} \qquad (I),$$

worin:

die R-Gruppen gleich oder verschieden sind und ausgewählt sind aus der Gruppe, bestehend aus Wasserstoff, $C_1$-$C_{12}$-Alkyl, $C_6$-$C_{12}$-Aryl, $C_7$-$C_{18}$-Arylalkyl, $C_7$-$C_{18}$-Alkylaryl, Halogenalkyl, Halogenaryl und einwertigen ethylenisch ungesättigten Resten,
X eine hydrolysierbare Funktionalität ist, ausgewählt aus der Gruppe, bestehend aus Halogen, Alkoxy, Aryloxy, Isocyanato, Amino, Acetoxy, Oximinoxy, Aminoxy, Amidato und Alkenyloxy, und
n eine ganze Zahl von 0 bis 3 ist, und

wenigstens einem zweiten Silan der Formel II:

$$R^1{}_mR^2{}_pSi(X)_{4-(m+p)} \qquad (II),$$

worin:

$R^1$ eine (meth)acrylische funktionelle Gruppe ist und $R^2$ gleich oder verschieden sein kann und ausgewählt ist aus der Gruppe, bestehend aus einwertigen ethylenisch ungesättigten Resten, Wasserstoff, $C_1$-$C_{12}$-Alkyl, $C_6$-$C_{12}$-Aryl, $C_7$-$C_{18}$-Arylalkyl und $C_7$-$C_{18}$-Alkylaryl,
X eine hydrolysierbare Funktionalität ist, ausgewählt aus der Gruppe, bestehend aus Halogen, Alkoxy, Aryloxy, Isocyanato, Amino, Acetoxy, Oximinoxy, Aminoxy, Amidato und Alkenyloxy,
m eine ganze Zahl von 1 bis 3 ist und
m+p eine ganze Zahl von 1 bis 3 ist,

(ii) ein polymerisierbares organisches (Meth)acrylatmonomer und
(iii) einen Polymerisationsinitiator.

**2.** Die Zusammensetzung nach Anspruch 1, bei der der Polymerisationsinitiator einen Hydroperoxyinitiator enthält.

3. Die Zusammensetzung nach Anspruch 1, bei der das zweite Silan 1 bis 99 Mol-% der Gesamtmenge aus erstem/n und zweitem/n Silan(en) ausmacht.

4. Die Zusammensetzung nach Anspruch 1, bei der das zweite Silan 10 bis 70 Mol-% der Gesamtmenge aus erstem/n und zweitem/n Silan(en) ausmacht.

5. Die Zusammensetzung nach Anspruch 1, bei der das zweite Silan 20 bis 50 Mol-% der Gesamtmenge aus erstem/n und zweitem/n Silan(en) ausmacht.

6. Die Zusammensetzung nach Anspruch 1, bei der das Siliconfluid 40 bis 95 Gew.-% der Zusammensetzung ausmacht.

7. Die Zusammensetzung nach Anspruch 6, bei der das Siliconfluid 50 bis 90 Gew.-% der Zusammensetzung ausmacht.

8. Die Zusammensetzung nach Anspruch 1, bei der das Siliconfluid etwa 60 bis etwa 85 Gew.-% der Zusammensetzung ausmacht.

9. Die Zusammensetzung nach Anspruch 1, bei der das polymerisierbare organische (Meth)acrylatmonomer in einer Konzentration von 1 bis 60 Gew.-% der Zusammensetzung vorliegt.

10. Die Zusammensetzung nach Anspruch 1, bei der das polymerisierbare organische (Meth)acrylatmonomer in einer Konzentration von 5 bis 50 Gew.-% der Zusammensetzung vorliegt.

11. Die Zusammensetzung nach Anspruch 1, bei der das polymerisierbare organische (Meth)acrylatmonomer in einer Konzentration von 10 bis 40 Gew.-% der Zusammensetzung vorliegt.

12. Die Zusammensetzung nach Anspruch 1, bei der der Polymerisationsinitiator in einer Menge von 0,01 bis 10 Gew.-% der Zusammensetzung vorliegt.

13. Die Zusammensetzung nach Anspruch 1, bei der die hydrolysierbare Funktionalität X Alkoxy ist.

14. Die Zusammensetzung nach Anspruch 1, bei der das polymerisierbare organische (Meth)acrylatmonomer ausgewählt ist aus der Gruppe, bestehend aus 2-Hydroxyethylmethacrylat und Polyethylenglycoldimethacrylat.

15. Die Zusammensetzung nach Anspruch 1, bei der R ausgewählt ist aus der Gruppe, bestehend aus $C_1$-$C_{12}$-Alkyl und $C_6$-$C_{12}$-Aryl.

16. Die Zusammensetzung nach Anspruch 1, bei der das erste Silan ausgewählt ist aus der Gruppe, bestehend aus Dimethyldichlorsilan, Phenyltrichlorsilan, Tetrachlorsilan, Trimethylchlorsilan, Trimethylmethoxysilan, Dimethyldimethoxysilan, Phenyltrimethoxysilan und Tetraethoxysilan.

17. Die Zusammensetzung nach Anspruch 1, bei der das polymerisierbare organische (Meth)acrylatmonomer ausgewählt ist aus der Gruppe, bestehend aus 2-Hydroxyethylmethacrylat, Polyethylenglycoldimethacrylat und Dihydrocyclopentadienyloxyethylmethacrylat.

18. Die Zusammensetzung nach Anspruch 1, bei der die (meth)acrylische funktionelle Gruppe $R^1$ ausgewählt ist aus der Gruppe, bestehend aus (Meth)acryloxyalkyl, (Meth)acryloxyalkenyl und (Meth)acryloxyaryl.

19. Die Zusammensetzung nach Anspruch 1, bei der die methacrylische funktionelle Gruppe $R^1$ Methacryloxypropyl ist.

20. Die Zusammensetzung nach Anspruch 1, bei der $R^2$ ausgewählt ist aus der Gruppe, bestehend aus $C_1$-$C_{12}$-Alkyl und $C_6$-$C_{12}$-Aryl, Alkenyl, (Meth)acryloxy und Vinyl.

21. Die Zusammensetzung nach Anspruch 1, bei der das zweite Silan ausgewählt ist aus der Gruppe, bestehend aus (Meth)acryloxypropyltrichlorsilan, (Meth)acryloxypropyltrimethoxysilan, (Meth)acryloxypropyldimethylchlorsilan, (Meth)acryloxymethyldichlorsilan und (Meth)acryloxymethyldimethylacryloxysilan.

**22.** Die Zusammensetzung nach Anspruch 1, bei der der Polymerisationsinitiator ausgewählt ist aus der Gruppe, bestehend aus Cumolhydroperoxid, p-Mentanhydroperoxid, Diisopropylbenzolhydroperoxid, Pinenhydroperoxid, Methylethylketonhydroperoxid, t-Butyl-2-hydroxyethylperoxid, t-Butylperoxymaleinsäure und t-Butylhydroperoxid.

**23.** Ein Verfahren zur Herstellung einer Zusammensetzung gemäß irgendeinem der Ansprüche 1-22, umfassend die Umsetzung wenigstens eines ersten Silans der Formel I in Gegenwart von Wasser mit wenigstens einem zweiten Silan der Formel II, um das Siliconfluid zu erzeugen, und bei Umgebungstemperatur und in Gegenwart von Sauerstoff die Zugabe des polymerisierbaren organischen (Meth)acrylatmonomers und des Polymerisationsinitiators zu dem Siliconfluid.

**24.** Ein Verfahren zur Imprägnierung der Porosität eines porösen Gegenstands, umfassend:

(A) Inkontaktbringen der Porosität des porösen Gegenstands mit einer Zusammensetzung gemäß irgendeinem der Ansprüche 1-22 unter Druckbedingungen, welche das Eindringen der Zusammensetzung in die Porosität bewirken, und
(B) Härten der eingedrungenen Zusammensetzung in der Porosität, um einen imprägnierten Gegenstand mit versiegelter Porosität zu ergeben.

**25.** Ein Verfahren zur Bildung eines gehärteten Siliconmaterials, umfassend die Härtung einer Siliconzusammensetzung gemäß irgendeinem der Ansprüche 1-22 unter anaeroben Bedingungen.

**26.** Die Verwendung der Zusammensetzung nach irgendeinem der Ansprüche 1-22 zur Imprägnierung der Porosität eines porösen Gegenstands, um die Porosität imprägnierend zu versiegeln.

**27.** Ein poröser Gegenstand, dessen Porosität mit einer gehärteten Siliconimprägnier-Dichtmittelzusammensetzung versiegelt ist, erzeugt durch Aufbringen einer Zusammensetzung nach irgendeinem der Ansprüche 1-22 in der Porosität zur Imprägnierung und anaerobe Härtung derselben.

## Revendications

**1.** Une composition durcissable en conditions anaérobies, comprenant :

(i) un fluide de silicone formé comme produit réactionnel d'au moins un silane de formule I :

$$R_nSi(X)_{4-n} \qquad (I)$$

où :

les groupes R sont identiques ou différents et sont choisis dans la classe formée par l'hydrogène, les groupes alkyles en $C_1$-$C_{12}$, aryles en $C_6$-$C_{12}$, arylalkyles en $C_7$-$C_{18}$, alkylaryles en $C_7$-$C_{18}$, halogénoalkyles, halogénoaryles et les radicaux monovalents éthyléniquement insaturés,
X est une fonctionnalité hydrolysable choisie dans la classe formée par les halogènes, les groupes alcoxy, aryloxy, isocyanato, amino, acétoxy, oximinoxy, aminoxy, amidato et alcényloxy, et
n est un nombre entier de 0 à 3, et
d'au moins un second silane de formule II

$$R^1{}_mR^2{}_pSi(X)_{4-(m+p)} \qquad (II)$$

où :

$R^1$ est un groupe fonctionnel (méth)acrylique et les $R^2$ peuvent être identiques ou différents et sont choisis dans la classe formée par les radicaux monovalents éthyléniquement insaturés, l'hydrogène, les groupes alkyles en $C_1$-$C_{12}$, aryles en $C_6$-$C_{12}$, arylalkyles en $C_7$-$C_{18}$ et alkylaryles en $C_7$-$C_{18}$,
X est une fonctionnalité hydrolysable choisie dans la classe formée par les halogènes, les groupes alcoxy,

aryloxy, isocyanato, amino, acétoxy, oximinoxy, aminoxy, amidato et alcényloxy,
m est un nombre entier de 1 à 3, et
m+p est un nombre entier de 1 à 3,

(ii) un monomère (méth)acrylate organique polymérisable ; et
(iii) un initiateur de polymérisation.

**2.** La composition de la revendication 1, dans laquelle l'initiateur de polymérisation comprend un initiateur du type hydroperoxyde.

**3.** La composition de la revendication 1, dans laquelle ledit second silane constitue 1 à 99 mol % du total desdits premier et second silanes.

**4.** La composition de la revendication 1, dans laquelle ledit second silane constitue 10 à 70 mol % du total desdits premier et second silanes.

**5.** La composition de la revendication 1, dans laquelle ledit second silane constitue 20 à 50 mol % du total desdits premier et second silanes.

**6.** La composition de la revendication 1, dans laquelle le fluide de silicone constitue 40 à 95 % en poids de la composition.

**7.** La composition de la revendication 6, dans laquelle le fluide de silicone constitue 50 à 90 % en poids de la composition.

**8.** La composition de la revendication 1, dans laquelle le fluide de silicone constitue environ 60 à environ 85 % en poids de la composition.

**9.** La composition de la revendication 1, dans laquelle le monomère (méth)acrylate organique polymérisable est présent à une concentration de 1 à 60 % en poids de la composition.

**10.** La composition de la revendication 1, dans laquelle le monomère (méth)acrylate organique polymérisable est présent à une concentration de 5 à 50 % en poids de la composition.

**11.** La composition de la revendication 1, dans laquelle le monomère (méth)acrylate organique polymérisable est présent à une concentration de 10 à 40 % en poids de la composition.

**12.** La composition de la revendication 1, dans laquelle l'initiateur de polymérisation est présent en une quantité qui est de 0,01 à 10 % en poids de la composition.

**13.** La composition de la revendication 1, dans laquelle la fonctionnalité hydrolysable X est un groupe alcoxy.

**14.** La composition de la revendication 1, dans laquelle le monomère (méth)acrylate organique polymérisable est choisi dans la classe formée par le méthacrylate de 2-hydroxyéthyle et le diméthacrylate de polyéthylèneglycol.

**15.** La composition de la revendication 1, dans laquelle R est choisi dans la classe formée par les groupes alkyles en $C_1$-$C_{12}$ et aryles en $C_6$-$C_{12}$.

**16.** La composition de la revendication 1, dans laquelle ledit premier silane est choisi dans la classe formée par le diméthyldichlorosilane, le phényltrichlorosilane, le tétrachlorosilane, le triméthylchlorosilane, le triméthylméthoxysilane, le diméthyldiméthoxysilane, le phényltriméthoxysilane et le tétraéthoxysilane.

**17.** La composition de la revendication 1, dans laquelle le monomère (méth)acrylate organique polymérisable est choisi dans la classe formée par le méthacrylate de 2-hydroxyéthyle, le diméthacrylate de polyéthylèneglycol et le méthacrylate de dihydrocyclopentadiényloxyéthyle.

**18.** La composition de la revendication 1, dans laquelle ledit groupe fonctionnel (méth)acrylique $R^1$ est choisi dans la classe formée par les groupes (méth)acryloxyalkyles, (méth)acryloxyalcényles et (méth)acryloxyaryles.

**19.** La composition de la revendication 1, dans laquelle ledit groupe fonctionnel méthacrylique $R^1$ est un groupe méthacryloxypropyle.

**20.** La composition de la revendication 1, dans laquelle $R^2$ est choisi dans la classe formée par les groupes alkyles en $C_1$-$C_{12}$ et aryles en $C_6$-$C_{12}$, alcényles, (méth)acryloxy et vinyle.

**21.** La composition de la revendication 1, dans laquelle ledit second silane est choisi dans la classe formée par le (méth)acryloxypropyl-trichlorosilane, le (méth)acryloxypropyl-triméthoxysilane, le (méth)acryloxypropyl-diméthylchlorosilane, le (méth)acryloxyméthyldichlorosilane et le (méth)acryloxyméthyl-diméthyl-acryloxysilane.

**22.** La composition de la revendication 1, dans laquelle l'initiateur de polymérisation est choisi dans la classe formée par l'hydroperoxyde de cumène, l'hydroperoxyde de *p*-menthane, l'hydroperoxyde de diisopropylbenzène, l'hydroperoxyde de pinène, l'hydroperoxyde de méthyléthylcétone, le peroxyde de *t*-butyle et de 2-hydroxyéthyle, l'acide *t*-butylperoxymaléique et l'hydroperoxyde de *t*-butyle.

**23.** Un procédé de préparation d'une composition selon l'une quelconque des revendications 1 à 22, consistant à faire réagir au moins un premier silane de formule I en présence d'eau avec au moins un second silane de formule II pour produire ledit fluide de silicone ; et, à la température ambiante et en présence d'oxygène, à ajouter audit fluide de silicone ledit monomère (méth)-acrylate organique polymérisable et ledit initiateur de polymérisation.

**24.** Un procédé d'imprégnation des pores d'un article poreux, consistant à :

(A) mettre en contact les pores de l'article poreux avec une composition selon l'une quelconque des revendications 1 à 22 dans des conditions de pression provoquant l'introduction de la composition dans les pores ; et
(B) faire durcir ladite composition introduite dans lesdits pores pour obtenir un article imprégné à pores obturés.

**25.** Un procédé de formation d'un matériau en silicone durcie, consistant à faire durcir une composition de silicone selon l'une quelconque des revendications 1 à 22 dans des conditions anaérobies.

**26.** Utilisation de la composition de l'une quelconque des revendications 1 à 22 pour imprégner les pores d'un article poreux pour obturer lesdits pores par imprégnation.

**27.** Un article poreux dont les pores sont obturés par une composition d'obturation par imprégnation à base de silicone durcie, produit en imprégnant lesdits pores d'une composition selon l'une quelconque des revendications 1 à 22 et en faisant durcir cette composition.

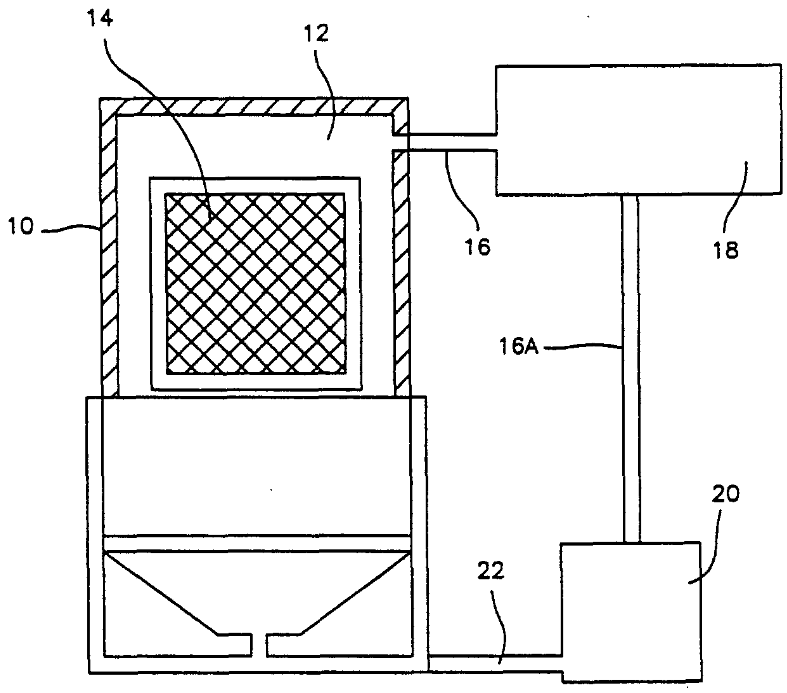


Fig. 1

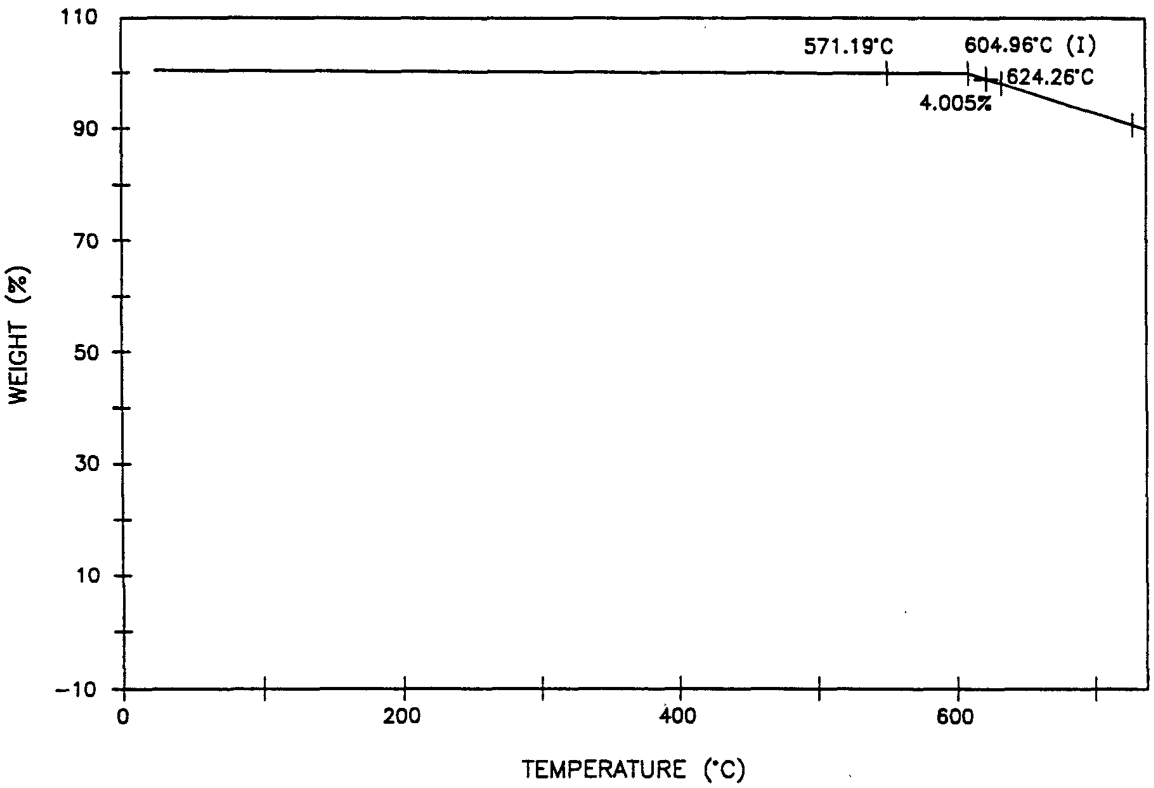
110
90
70
50
30
10
-10
WEIGHT (%)
0
200
400
600
TEMPERATURE (°C)
571.19°C
604.96°C (I)
624.26°C
4.005%

Fig. 2

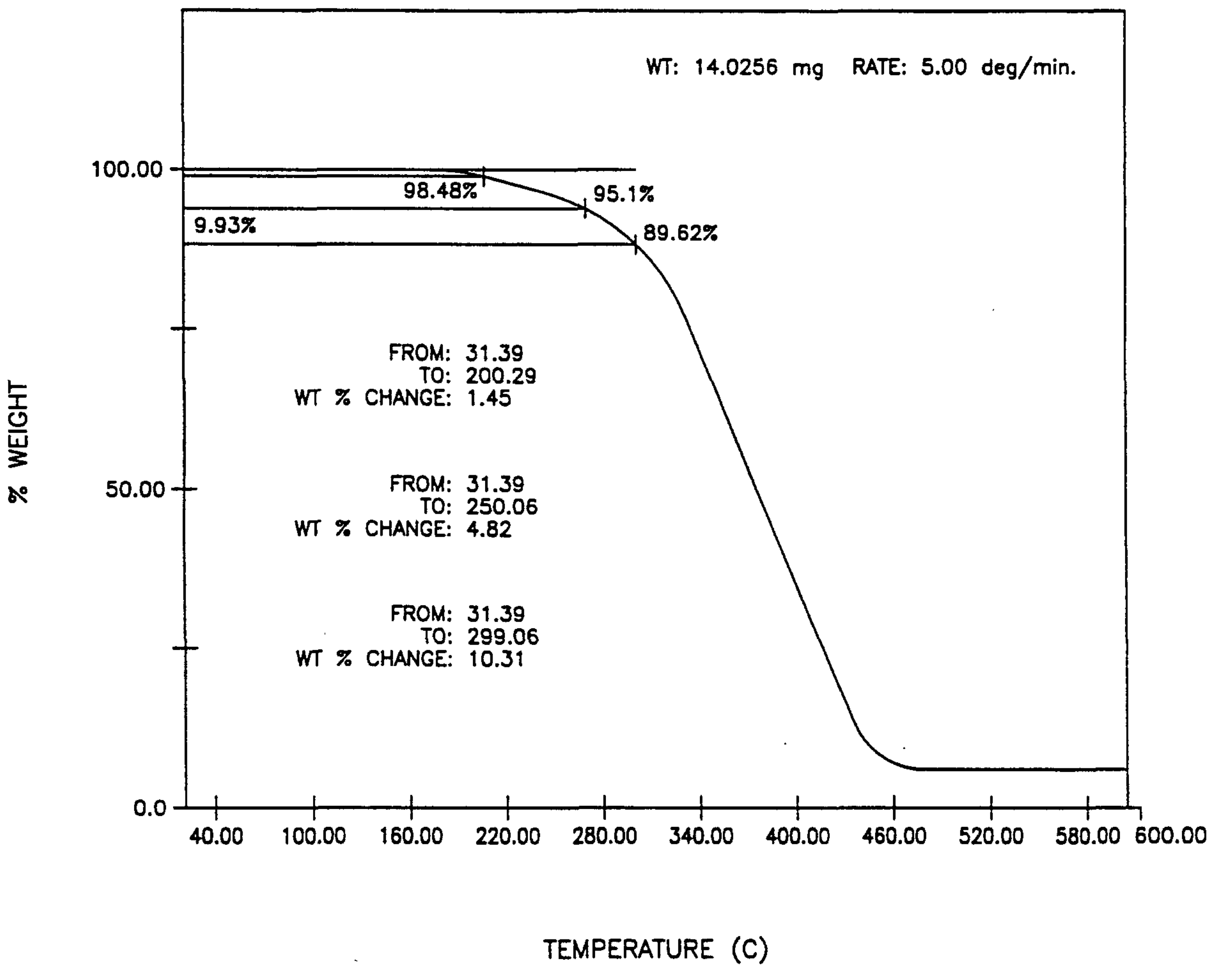
WT: 14.0256 mg RATE: 5.00 deg/min.
100.00
50.00
0.0
% WEIGHT
98.48%
95.1%
9.93%
89.62%
FROM: 31.39
TO: 200.29
WT % CHANGE: 1.45
FROM: 31.39
TO: 250.06
WT % CHANGE: 4.82
FROM: 31.39
TO: 299.06
WT % CHANGE: 10.31
40.00 100.00 160.00 220.00 280.00 340.00 400.00 460.00 520.00 580.00 600.00
TEMPERATURE (C)

Fig. 3

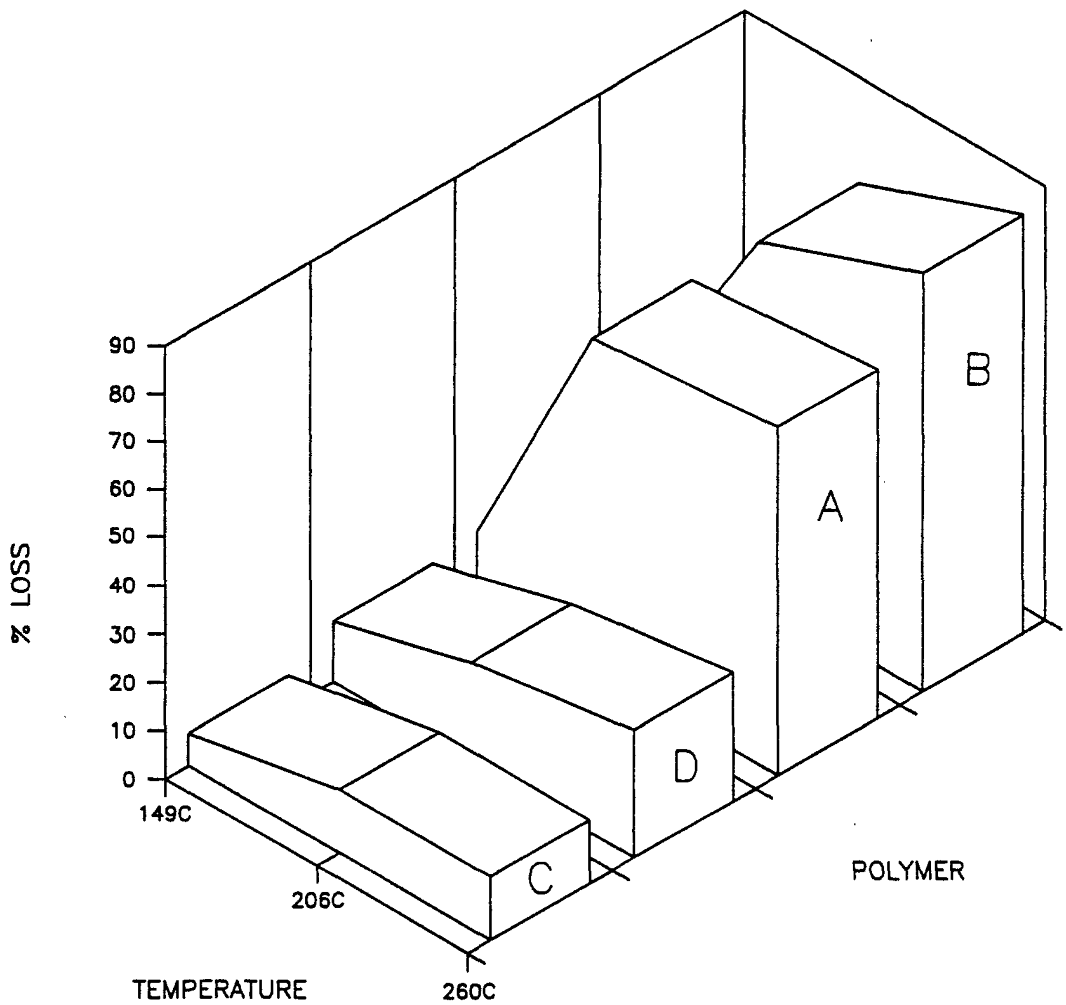
90
80
70
60
50
40
30
20
10
0
% LOSS
149C
206C
260C
TEMPERATURE
POLYMER
A
B
C
D

Fig. 4